# EUROPEAN PATENT APPLICATION

(11) **EP 2 757 701 A2**
(43) Date of publication of application: **23.07.2014**
(21) Application number: 13196596.4
(22) Date of filing: 11.12.2013
(51) Int. Cl.: H04B 1/38

(54) **System and method for controlling ground transceiver communications with a satellite transceiver**

(30) Priority: 17.01.2013 US 201313743815
(71) Applicant: Delphi Technologies, Inc., Troy MI 48007 (US)
(72) Inventor: Walker, Glenn A., Greentown, IN Indiana 46936 (US); Dockermeyer Jr., Joseph R., Kokomo, IN Indiana 46901 (US)
(74) Representative: Neill, Andrew Peter

(57) **Abstract**

A ground transceiver (16) is configured to communicate with a satellite transceiver (14). The satellite transceiver (14) is configured to receive concurrently a plurality of messages (20) at substantially the same carrier frequency from a plurality of ground transceivers (16). The ground transceiver (16) includes a transmitter configured to determine a transmit power that the transmitter is authorized to use to transmit a message (20) based on a comparison of a ranking threshold and a transceiver ranking of the ground transceiver (16).

## Description

### TECHNICAL FIELD OF INVENTION

This disclosure generally relates to controlling communications between satellite transceiver configured to receive concurrently a plurality of messages at substantially the same carrier frequency from a plurality of ground transceivers, and those ground transceivers, and more particularly relates to determining if or when a message is transmitted by a particular ground transceiver, or determining how much power is used to transmit a message from a particular ground transceiver to the satellite transceiver.

### BACKGROUND OF INVENTION

Terrestrial/Satellite communication systems with various protocols and standards to optimize desired services have been proposed. For example, the European Telecommunications Standards Institute (ETSI) has proposed an Enhanced Spread Spectrum Aloha (E-SSA) protocol or standard that uses iterative processing to maximize the number of ground transceivers that can transmit to a satellite transceiver or satellite system at any given time. The iterative process used by the satellite system records signal received that includes all the superimposed transmitted messages from multiple ground transceivers, and detects the strongest message and decodes it to get an error free message. The iterative process then subtracts the message from a recording of the signal received using a cancellation technique to get a version of the recording without the strongest message. The iterative process repeats this operation with the next strongest signals until there are no signals left to decode.

Aloha is a term used to describe communications where ground transceivers can transmit a message at any time and then check to see if the message was received by a satellite transceiver or satellite system. If too many ground transceivers send messages at the same time, 'message collisions' may occur, and the satellite transceiver may not detect the message. If the satellite system does not acknowledge that the message was receive, it may be an indication that a message collision occurred or the message did not have enough energy to be detected. If too many ground transceivers transmit simultaneously, a high priority message (e.g. a message indicating that a vehicle collision has occurred) may not be detected by the satellite system.

What is needed is a way to manage how ground transceivers send messages to increase the probability that a high priority message is received by a satellite transceiver or satellite system that receives concurrently (i.e. at the same time) a plurality of messages at substantially the same carrier frequency from a plurality of ground transceivers, especially during emergency and/or high use conditions such as congested areas, disasters, public safety, and peak time of day periods.

### SUMMARY OF THE INVENTION

Described herein ways to configure ground transceivers and satellite transceivers, or method to operate the same, to control if or when a message is transmitted by a particular ground transceiver, or how much power is used to transmit a message from a particular ground transceiver to the satellite transceiver configured to receive concurrently a plurality of messages at substantially the same carrier frequency from a plurality of ground transceivers.

In accordance with one embodiment, a ground transceiver configured to communicate with a satellite transceiver is provided. The satellite transceiver is configured to receive concurrently a plurality of messages at substantially the same carrier frequency from a plurality of ground transceivers. The ground transceiver includes a transmitter configured to determine a transmit power that the transmitter is authorized to use to transmit a message based on a comparison of a ranking threshold and a transceiver ranking of the ground transceiver. The ground transceiver is pre-programmed with the ranking threshold. The ground transceiver includes a receiver configured to receive the ranking threshold from the satellite transceiver. The transceiver ranking is based on an identification number of the ground transceiver. The transceiver ranking corresponds to one of a transceiver class, a transceiver model, a transceiver subscription-level, and a transceiver group-application. The transmit power is also determined based on a signal strength of a signal received from the satellite transceiver. The transmit power is also determined based on a geographic location of the ground transceiver. The ground transceiver includes the receiver configured to receive a geographic preference from the satellite transceiver, and the transmit power is determined based on a comparison of the geographic preference to the geographic location. The transmit power is also determined based on an installation configuration of the ground transceiver.

In another embodiment, the satellite transceiver configured to receive concurrently the plurality of messages at substantially the same carrier frequency from the plurality of ground transceivers is provided. The satellite transceiver is further configured to transmit a priority threshold indicative of the transmit power that the ground transceiver having the transceiver ranking is authorized to use to transmit the message. A terrestrial/satellite communication system includes the ground transceiver and the satellite transceiver in accordance with the described embodiment.

In yet another embodiment, a method of controlling communication between a satellite transceiver and a ground transceiver is provided. The satellite transceiver configured to receive concurrently a plurality of messages at substantially the same carrier frequency from a plurality of ground transceivers. The method includes the step of transmitting a ranking threshold by the satellite transceiver. The ranking threshold is indicative of a transmit power that a ground transceiver is authorized to use to transmit a message. The method also includes the step of receiving the ranking threshold by the ground transceiver. The method also includes the step of and determining a transmit power of the transmitter to transmit a message based on a comparison of the ranking threshold and a transceiver ranking of the ground transceiver. The method further comprises transmitting the message using the transmit power that is authorized.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a perspective view of a terrestrial/satellite communication system in accordance with one embodiment;
Fig. 2 is a diagram of part of the system of Fig. 1 in accordance with one embodiment;
Fig. 3 is flowchart of a method of operating the system of Fig. 1 in accordance with one embodiment; and
Fig. 4 is flowchart of a method of operating the system of Fig. 1 in accordance with one embodiment.

### DETAILED DESCRIPTION

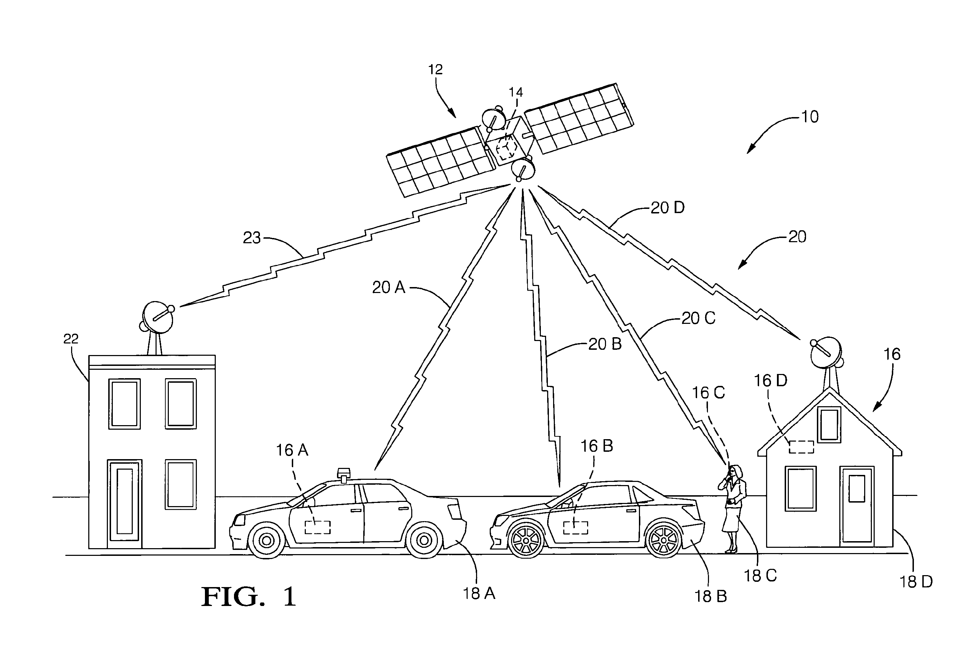

Fig. 1 illustrates a non-limiting example of a terrestrial/satellite communication system, hereafter the system 10. In general, the system 10 includes a satellite 12 equipped with a satellite transceiver 14. The system 10 is generally configured to manage or control communications between the satellite transceiver 14 and a plurality of ground transceivers 16. Non-limiting examples of the ground transceiver 16 includes a ground transceiver 16A or 16B installed in a vehicle 18A or 18B respectively, a ground transceiver 16C that is a hand held device operated by a pedestrian 18C, and a ground transceiver 16D installed in a residence 18D or other building such as a business or place of commerce. Hereafter, the plurality of ground transceivers may be often be referred to, individually or as a group, as the ground transceiver 16 or the ground transceivers 16.

In general, the satellite transceiver 14 is configured to receive concurrently (i.e. at the same time or simultaneously) a plurality of messages from the plurality of ground transceivers (e.g. 18A, 18B, 18C, 18D) because the time at which a ground transceiver initiates sending a message is not coordinated. That is, each of the ground transceivers 16 can individually determine when to transmit a message 20, and so the time intervals that the various messages are sent may overlap or coincide. The various messages are illustrated as a signals or communication links between the satellite transceiver 14 and the ground transceiver 16. Hereafter, those messages are often referred to particularly as a message 20A from the ground transceiver 16A, a message 20B from the ground transceiver 16B, a message 20C from the ground transceiver 16C, a message 20D from the ground transceiver 16D; or generically as a message 20 or messages 20 from the ground transceiver 16. The satellite transceiver 14 may receive the messages 20 concurrently, and the messages 20 may all be transmitted by the ground transceivers 16 at substantially the same carrier frequency. As used herein, substantially the same carrier frequency means that differences of carrier frequencies for each of the messages 20 is due to part-to-part type variation of the carrier frequency generation equipment (not shown) in the ground transceivers 16. The details of such concurrent message transmission at substantially the same carrier frequency is described in the Enhanced Spread Spectrum Aloha (E-SSA) standard or protocol published by the European Telecommunications Standards Institute (ETSI).

The system 10 may also include a base station 22 that may operate the satellite 12 as described herein. By way of example and not limitation, the satellite 12, or more particularly the satellite transceiver 14, may merely be a repeater for a base signal 23 from the base station 22. It should be appreciated that signal processing or other actions described herein that are attributed to the satellite 12 or the satellite transceiver 14 may also be attributed to the base station 22. Alternatively, the satellite 12 itself may perform some of the signal processing described herein, and may determine information that is sent to the ground transceivers 16, where the information sent is determined by the satellite 12 independent of information sent via the base signal 23 from the base station 22. As such, references to the satellite transceiver 14 may optionally include the base station 22 as part of the any communications being described, and are not limited only to transceiver hardware located in the satellite 12. While many of the examples given below are related to the ground transceiver 16 being installed in a vehicle, the teachings set forth herein are also applicable to ground transceivers carried by a pedestrian 18C, or installed in a residence 18D.

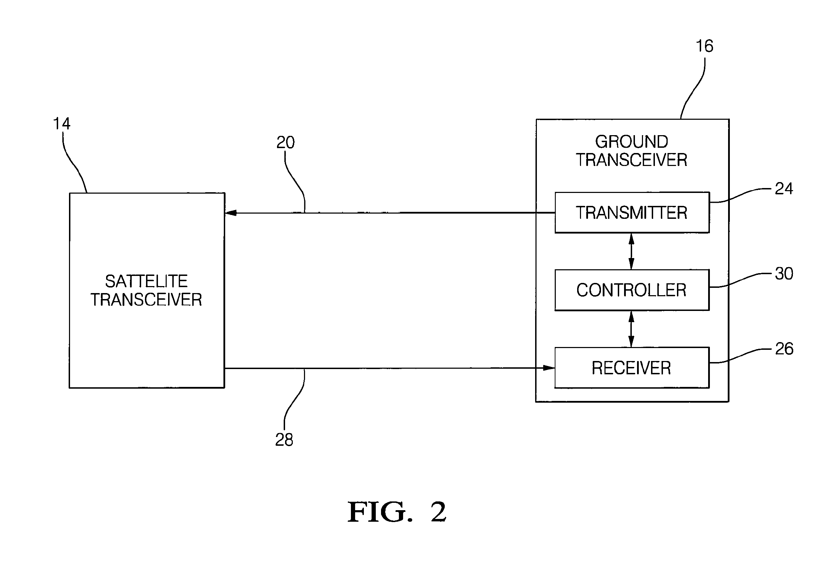

Fig. 2 illustrates a non-limiting example of communications between the satellite transceiver 14 and the ground transceiver 16 in more detail than shown in Fig. 1. The ground transceiver 16 may include a transmitter 24 configured to transmit the message 20 to the satellite transceiver 14, and include a receiver 26 configured to receive information 28 from the satellite transceiver 14. The ground transceiver 16 may also include a controller 30 coupled to the transmitter 24 and the receiver 26. The controller 30 may include a processor (not shown) such as a microprocessor or other control circuitry as should be evident to those in the art. The controller 30 may include memory, including non-volatile memory, such as electrically erasable programmable read-only memory (EEPROM) for storing one or more routines, thresholds and captured data. The one or more routines may be executed by the processor to perform steps for determining the message 20 transmitted by the transmitter 24 and processing the information 28 received by the receiver 26 for controlling the ground transceiver 16 as described herein. While not specifically shown, the satellite transceiver 14 may similarly include a transmitter, a receiver, and a controller with features similar to those shown in the ground transceiver 16, as will be evident to those in the art.

In another embodiment, the receiver 26 may be configured to determine signal strength of a signal (e.g. the information 28) received from the satellite transceiver 14. Then, the transmitter 24 or the controller 30 may be configured to determine a transmit power for the transmitter 24 to transmit the message 20 based on the signal strength of the signal received from the satellite transceiver 14. Such a feature may be useful if, for example, the signal path between the satellite transceiver 14 and the ground transceiver 16 is blocked by trees (foliage), a building, or a roof of a parking structure where the vehicle 18A is located. If the signal strength of the information 28 is low, it can be presumed that the signal path is blocked. As such, the transmit power may be increased to transmit the message 20 through the obstruction to arrive at the satellite transceiver 14 with sufficient signal strength.

In another embodiment, the receiver 26 may be configured to determine a count of other ground transceivers concurrently transmitting messages to the satellite transceiver. Such a count may be based on the receiver 26 keeping track of how many ground transceiver identification numbers are detected. Such a count may be used to determine if the transmit power of the transmitter should be increased to assure that the message 20 is received by the satellite transceiver 14, or if the ground transceiver 16 should wait until the count is lower.

In another embodiment, the ground transceiver 16 may be configured to receive a geographic preference from the satellite transceiver 14, and the transmit power may be determined based on a comparison of the geographic preference to the geographic location. As such, the transmit power may be determined based on a geographic location of the ground transceiver. Such a feature may be useful to, for example, overcome identified local weather obstructions, or in recognition that an emergency exists proximate to the geographic location.

In another embodiment, the transmitter 24 may be configured to determine a transmit power of the transmitter to transmit a message based on an installation configuration of the ground transceiver 16. For example, a handheld ground transceiver (the ground transceiver 16C) may require reduced transmit power to prevent potential injury to the pedestrian 18C. However, if the installation has a remote antenna such as is shown for the ground transceiver 16D installed on the residence 18D, then higher power may be used without risking potential injury to persons inside or around the residence 18D.

The non-limiting examples that follow demonstrate various ways to operate the transmitter 24 in order to increase the probability that the message 20 is received by the satellite transceiver 14, or decrease the risk that a message from one ground transceiver interferes with a message from another ground transceiver, are described. In some instances, how the operate the transmitter 24 may be based on the information 28 received by the ground transceiver 16. In other instances, the ground transceiver 16 may autonomously determine how to operate the transmitter 24 without regard to, or in the absence of, the information 28. Furthermore, these two instances of how to operate the transmitter 24 (dependent on the information 28 OR autonomous) can be further characterized as being based on, but not limited to, a transceiver ranking of the ground transceiver 16, and a priority rating of the message 20 to be sent.

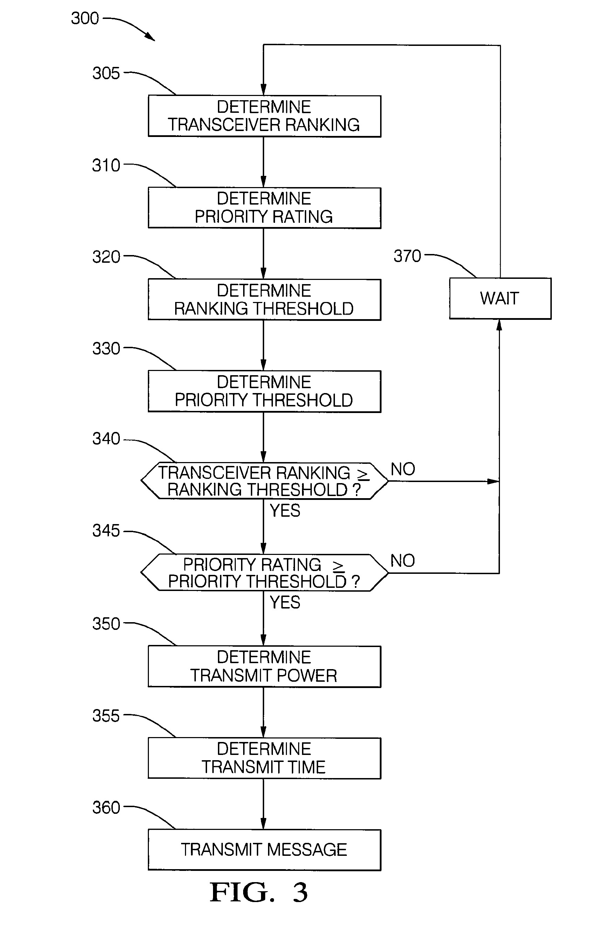

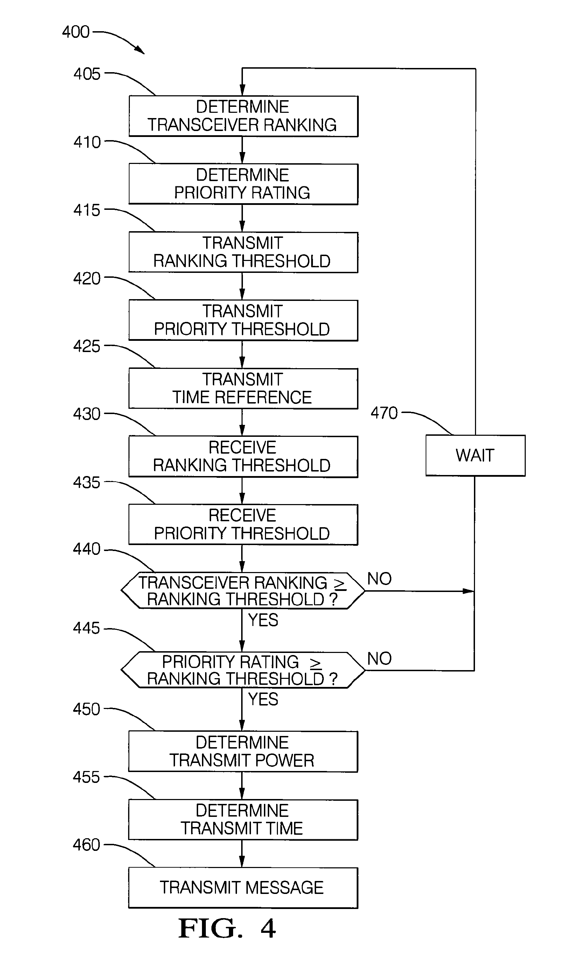

Fig. 3 illustrates a non-limiting example of a method 300 of controlling communication between a satellite transceiver 14 and a ground transceiver 16, where the satellite transceiver 14 is configured to receive concurrently a plurality of messages 20 at substantially the same carrier frequency from a plurality of ground transceivers 16A, 16B, 16C, and 16D. A distinguishing aspect of the method 300 is that method 300 is generally directed to the instance where the ground transceiver 16 acts autonomously to determine how to operate the transmitter 24. In contrast, a non-limiting example of a method 400 in Fig. 4 illustrates an example where the ground transceiver 16 receives various kinds of information (e.g. - the information 28) and uses that information to determine how to operate the transmitter 24. It is contemplated that the method 300 and the method 400 could be combined or blended in various ways so that how to operate the transmitter 24 may be characterized as partially autonomous on the part of the ground transceiver 16, and partially dependent on the information 28 received from the satellite transceiver 14.

Step 305, DETERMINE TRANSCEIVER RANKING, is an optional step that may include establishing or defining several ranks or ranking levels for the ground transceivers 16. For example, if the vehicle 18A is a government vehicle such as a police car or fire-department vehicle, the ground transceiver 16A may be assigned a transceiver ranking characterized as being higher than, for example, the ground transceiver 16B installed in a civilian vehicle. As will be described in more detail, the ground transceiver 16 may be pre-programmed during manufacturing with the transceiver ranking, and so the sale or distribution of a ground transceiver having a higher than normal transceiver ranking may be controlled or restricted.

Alternatively, the transceiver ranking may be determined or indicated by an identification number of the ground transceiver 16, such as a serial number, a transceiver class, a transceiver model, a transceiver subscription-level, or a transceiver group-application. The transceiver class, transceiver model number, or transceiver group-application may be ways that the ground transceivers 16 may be tracked so that the sale of the ground transceiver 16 with a high transceiver ranking is to an authorized purchaser.

By way of further example and not limitation, the ground transceiver 16 sold to civilian and non-civilian customers may be identical, but the transceiver ranking of a particular ground transceiver is determined or established when a subscription to the system 10 for a particular ground transceiver having a particular serial number is established. As such, the information 28 may include data that indicates a transceiver ranking of the ground transceiver 16, which may be stored in the controller 30. By this arrangement, the receiver 26 may be configured to receive a transceiver ranking from the satellite transceiver 14.

Step 310, DETERMINE PRIORITY RATING, is an optional step that may include determining if the message 20 that is about to be sent by the transmitter 24 is characterized as having a higher than normal priority. High priority messages may include messages arising from an emergency or other situation requiring immediate and/or high reliability communications, such as the vehicle 18A being involved in a collision, or that the airbags in the vehicle 18A have been deployed. Such messages may be automatically sent by driver assistance providers such as ON-STAR®. If the message 20 is determined to be a high priority message, then additional steps described below may be taken or executed to increase the probability that the message in question (the high priority message) is detected or received by the satellite transceiver 14.

Conversely, the priority rating of a message 20 may be determined to be a low priority message. Additional steps described below may be taken to reduce the probability that a low priority message will interfere with the satellite transceiver 14 detecting or receiving some other message having a higher priority rating, i.e. higher than low priority, for example normal priority. An example of a low priority rating is if the ground transceiver 16D is installed in the residence 18D and the ground transceiver 16B attempts to communicate the message 20D that indicates that a pay-per-view movie has been viewed. Such a low priority message does not need to be immediately received by satellite transceiver 14. As an option, the message 20D can wait until the volume of messages being sent to the satellite transceiver 14 is relatively low, in the middle of the night for example.

It is contemplated that the system 10 may execute either step 305 or step 310, or both steps depending on the configuration of the system 10. For example, the system 10 may be configured to be responsive only to differences in the priority rating of a message and not the transceiver ranking of the ground transceiver 16, and so executing step 305 may be unnecessary. Conversely, the system 10 may be configured to be responsive only to transceiver ranking, and so executing step 310 may be unnecessary.

Step 320, DETERMINE RANKING THRESHOLD, is an optional step that may include determining a ranking threshold for the ground transceiver 16 based on a preprogrammed ranking threshold stored in the controller 30. The ranking threshold may be programmed into the controller as part of a manufacturing process, or as part of a set-up process at the point of sale of the ground transceiver. It should be recognized that if step 305, DETERMINE TRANSCEIVER RANKING, is not performed, there is no need to perform this step 320.

Step 330, DETERMINE PRIORITY THRESHOLD, is an optional step that may include determining a priority threshold of a message 20 about to be sent by the ground transceiver 16 based on a preprogrammed priority threshold stored in the controller 30. The priority threshold may be programmed into the controller as part of a manufacturing process, or as part of a set-up process at the point of sale of the ground transceiver. It should be recognized that if step 310, DETERMINE PRIORITY RATING, is not performed, there is no need to perform this step 330.

Step 340, TRANSCEIVER RANKING ≥ RANKING THRESHOLD, is an optional step that may include the controller 30 or the transmitter 24 performing a comparison of the ranking threshold determined in step 320 to the transceiver ranking of the ground transceiver determined in step 305. If the transceiver ranking is greater than or equal to the ranking threshold (YES), then the transceiver is generally authorized to transmit the message 20, and so the method 300 progresses to step 345. If NO, the method 300 proceeds to step 370, WAIT, where the ground transceiver 16 may wait for a predetermined or randomly selected time before restarting the method 300. To prevent the ground transceiver 16 from being stuck in this loop, step 370 may also include a step to temporarily increase the transceiver ranking or lower the ranking threshold so that after a plurality of attempts to pass the test in step 340, the result is YES. Alternatively, step 370 may also include a step to remove or delete a message from a transmission queue or memory in the controller 30 based on a time out, quantity of messages in the queue or other means to maintain receiver performance. While step 340 may suggest that a comparison of numerical values is performed, it is contemplated that the comparison may be a GO/NO-GO type of comparison, such as determining if the transceiver ranking of the ground transceiver is on a list of authorized transceiver rankings, where that list is characterized as the ranking threshold.

Step 345, PRIORITY RATING ≥ PRIORITY THRESHOLD, is an optional step that may include the controller 30 or the transmitter 24 performing a comparison of the priority threshold determined in step 330 to the priority rating of a message 20 determined in step 310. If the priority rating is greater than or equal to the priority threshold (YES), then the transceiver is generally authorized to transmit the message 20, and so the method 300 progresses to step 350. If NO, the method 300 proceeds to step 370, WAIT, where the ground transceiver 16 may wait for a predetermined or randomly selected time before restarting the method 300. To prevent the ground transceiver 16 from being stuck in this loop, step 370 may also include a step to temporarily increase the priority rating or lower the priority threshold so that after a plurality of attempts to pass the test in step 345, the result is YES. Alternatively, step 370 may also include a step to remove or delete a message from a transmission queue or memory in the controller 30 based on a time out, quantity of messages in the queue or other means to maintain receiver performance. If the priority rating is greater than or equal to the priority threshold, then the ground transceiver 16 is generally authorized to transmit the message 20. While step 345 may suggest that a comparison of numerical values is performed, it is contemplated that the comparison may be a GO/NO-GO type of comparison, such as determining if the priority rating of the ground transceiver is on a list of authorized priority rating, where that list is characterized as the priority threshold.

After it has been determined that the ground transceiver 16 is authorized to transmit because the transceiver ranking of the ground transceiver 16 is sufficient, or because the priority ranking of the message 20 is sufficient, additional steps may be taken to, for example, increase the probability that the message 20 is detected or received by the satellite transceiver 14.

Step 350, DETERMINE TRANSMIT POWER, is an optional step that may include configuring or equipping the transmitter 24 to vary the amount of transmit power that the transmitter 24 is authorized to use to transmit the message 20. The transmit power used may be determined (i.e. selected) based on a comparison of the priority threshold and a priority rating of the message to be transmitted, or be determined based on a comparison of the ranking threshold and the transceiver ranking of the ground transceiver 16, or both. By increasing the transmit power, the probability that the satellite transceiver 14 will detect or receive the message 20 will be increased.

By way of an example and not limitation, if the message 20B from the ground transceiver 16B is being sent by a driver assistance system such as ON-STAR® in response to the driver assistance system detecting that the vehicle 18B has been involved in a collision, or because the vehicle airbags have been deployed, then the message 20B may be designated as a high priority message. As such, the controller 30 or the transmitter 24 in the ground transceiver 16B may increase the transmit power used by the ground transceiver 16B so that the message 20B is more likely to be detected or received by the satellite transceiver 14.

By way of another example and not limitation, if the ground transceiver 16B is installed in a police vehicle (the vehicle 18A), the ground transceiver 16B may increase the transmit power used to transmit the message 20A in response to a police officer pressing a button (not shown) on the ground transceiver 16A to indicate that the message 20A is a high priority message, for example a request to send an ambulance.

Step 355, DETERMINE TRANSMIT TIME, is an optional step that may include determining a transmit time that corresponds to a transmit time-of-day interval indicative of what time-of day that the transmitter is authorized to transmit the message. By way of example and not limitation, if the ground transceiver 16D is part of a business transaction communication system that can wait until the middle of the night to report business transactions made during day-time business hours, then the transmit time may be scheduled to be at 02:00 hours (2:00 am) local time. It is contemplated that reduced transmit power may be used to transmit the message 20D if the message 20D is sent at this transmit time.

Step 360, TRANSMIT MESSAGE, may include the ground transceiver 16 transmitting the message 20 using the transmit power determined in step 350, and/or at the transmit time determined in step 355.

Step 370, WAIT, is described above in the description of steps 340 and 345.

Fig. 4 illustrates a non-limiting example of a method 400 of controlling communication between a satellite transceiver 14 and a ground transceiver 16, where the satellite transceiver 14 is configured to receive concurrently a plurality of messages 20 at substantially the same carrier frequency from a plurality of ground transceivers 16A, 16B, 16C, and 16D. A distinguishing aspect of the method 400, in contrast to the method 300, is that the ground transceiver 16 receives various kinds of information (e.g - the information 28) and uses that information to help determine how to operate the transmitter 24.

Step 405, DETERMINE TRANSCEIVER RANKING, is an optional step that may include establishing or defining several ranks or ranking levels for the ground transceivers 16, similar to as describe for step 305.

Step 410, DETERMINE PRIORITY RATING, is an optional step that may include determining if the message 20 that is about to be sent by the transmitter 24 is characterized as having a higher than normal priority, similar to as describe for step 310.

Step 415, TRANSMIT RANKING THRESHOLD, is an optional step that may include the satellite transceiver 14 transmitting a ranking threshold to the ground transceiver 16, which may be stored in the controller 30. The ranking threshold is generally indicative of a transceiver ranking of a ground transceiver that that is necessary for the ground transceiver 16 to be authorized to transmit a message 20 to the satellite transceiver 14. It is contemplated that the ranking threshold may change over time. For example, the ranking threshold may increase in times of a widespread emergency such as during a hurricane so that police, fire, and other safety/rescue related services are able to use the system 10 without undue interference.

By way of a further example and not limitation, the ranking threshold received by the ground transceiver 16 may be dependent on a geographic location or area of the ground transceiver. For example, if flooding occurs in a defined geographic location or area, the ranking threshold for the ground transceivers 16 within that area may be decreased so that the ground transceivers within the area are more likely to establish or maintain communication with the satellite transceiver 14. Alternatively, or in addition, the ranking threshold for the ground transceivers 16 outside that area may be increased for the same effect.

Step 420, TRANSMIT PRIORITY THRESHOLD, is an optional step that may include the satellite transceiver 14 transmitting a priority threshold to the ground transceiver 16, which may be stored in the controller 30. The priority threshold is generally indicative of a priority rating of the message 20 to be sent by the ground transceiver 16 that is necessary for the ground transceiver 16 to be authorized to transmit a message 20 to the satellite transceiver 14. It is contemplated that the priority threshold may change over time. For example, the priority threshold may be increased when the number of messages being received by the satellite transceiver is high, such as during rush hour, or in the event of an emergency, as described above. By way of a further example and not limitation, the priority threshold received by the ground transceiver 16 may be dependent on a geographic location or area of the ground transceiver, as described above.

Step 425, TRANSMIT TIME REFERENCE, is an optional step that may include the satellite transceiver 14 transmitting a reference pulse, a delay time indicative of the beginning of a time-slot measured relative to the reference pulse, delay time indicative of how long the ground transceiver should wait to retransmit the message 20 if a prior attempt is not acknowledged by the satellite transceiver 14, or a clock time indicative of a transmit time-of-day that the ground transceiver 16 should transmit the message 20.

By way of an example and not limitation, to increase the probability of the satellite transceiver 14 receiving as many of the messages 20 as possible, the ground transceivers 16 may receive a delay time from the satellite transceiver that, in combination with an identification number of the ground transceiver 16, indicates a delay time after receiving the reference pulse or similar time reference indicator that the ground transceiver 16 should transmit the message 20. Such a delay time may be used to indicate a transmit time that corresponds to a transmit time-slot or time interval relative to the time reference that the transmitter 24 or the ground transceiver 16 is authorized to transmit the message 20. By way of another example, the transmit time may be used to indicate a transmit time-of-day interval day that the transmitter is authorized to transmit the message.

Step 430, RECEIVE RANKING THRESHOLD, is an optional step that may include the receiver 26 or the ground transceiver 16 receiving the ranking threshold transmitted in step 415. It should be apparent that if step 415 is not executed, then this step would not be executed.

Step 435, RECEIVE PRIORITY THRESHOLD, is an optional step that may include the receiver 26 or the ground transceiver 16 receiving the priority threshold transmitted in step 420. It should be apparent that if step 420 is not executed, then this step would not be executed.

Step 440, TRANSCEIVER RANKING ≥ RANKING THRESHOLD, is an optional step that may include the controller 30 or the transmitter 24 performing a comparison of the ranking threshold received in step 430 to the transceiver ranking of the ground transceiver determined in step 405. In many respects, step 440 is similar to step 340.

Step 445, PRIORITY RATING ≥ PRIORITY THRESHOLD, is an optional step that may include the controller 30 or the transmitter 24 performing a comparison of the priority threshold received in step 435 to the priority rating of a message 20 determined in step 410. In many respects, step 445 is similar to step 345.

Step 450, DETERMINE TRANSMIT POWER, is an optional step that may include configuring or equipping the transmitter 24 to vary the amount of transmit power that the transmitter 24 is authorized to use to transmit the message 20. In many respects, step 450 is similar to step 350.

Step 455, DETERMINE TRANSMIT TIME, is an optional step that may include determining a transmit time that corresponds to a transmit time-slot indicative of a time interval relative to the time reference that the transmitter is authorized to transmit the message.

Step 460, TRANSMIT MESSAGE, may include the ground transceiver 16 transmitting the message 20 using the transmit power determined in step 450, and/or at the transmit time determined in step 455.

Step 470, WAIT, is executed if the tests in step 440 or 445 result in a NO outcome. In many respects, step 470 is similar to step 370.

Accordingly, a terrestrial/satellite communication system (the system 10), a satellite transceiver 14 and a ground transceiver 16 for the system 10, and a method 300 and a method 400 of controlling communication is provided. The various configurations and methods are useful to coordinate the transmission of the messages 20 to increase the probability that an important or high priority message is not lost because too many ground transceivers are transmitting concurrently. Satellite systems that incorporate these features provide their users with greater probability of high priority messages being received. This enables those satellite systems an added benefit over systems that do not use these features. These features enable a limited resource system (satellite) to provide higher levels of service for receivers and messages that are of the highest importance while maintaining a system that can be used for lower services as well.

While this invention has been described in terms of the preferred embodiments thereof, it is not intended to be so limited, but rather only to the extent set forth in the claims that follow.

## Claims

1. A ground transceiver (16) configured to communicate with a satellite transceiver (14), wherein the satellite transceiver (14) is configured to receive concurrently a plurality of messages (20) at substantially the same carrier frequency from a plurality of ground transceivers (16), said ground transceiver (16) comprising:
a transmitter (24) configured to determine a transmit power that the transmitter (24) is authorized to use to transmit a message (20) based on a comparison of a ranking threshold and a transceiver ranking of the ground transceiver (16).

2. Ground transceiver (16) according to the preceding claim, wherein the ground transceiver (16) is pre-programmed with the ranking threshold.

3. Ground transceiver (16) according to anyone of the preceding claims, wherein the ground transceiver (16) includes a receiver (26) configured to receive the ranking threshold from the satellite transceiver (14).

4. Ground transceiver (16) according to anyone of the preceding claims, wherein the transceiver ranking is based on an identification number of the ground transceiver (16).

5. Ground transceiver (16) according to anyone of the preceding claims, wherein the transceiver ranking corresponds to one of a transceiver class, a transceiver model, a transceiver subscription-level, and a transceiver group-application.

6. Ground transceiver (16) according to anyone of the preceding claims, wherein the transmit power is also determined based on a signal strength of a signal received from the satellite transceiver (14).

7. Ground transceiver (16) according to anyone of the preceding claims, wherein the transmit power is also determined based on a geographic location of the ground transceiver (16).

8. Ground transceiver (16) according to anyone of the preceding claims taken in combination with claim 3 and 7, wherein the ground transceiver (16) includes the receiver (26) configured to receive a geographic preference from the satellite transceiver (14), and the transmit power is determined based on a comparison of the geographic preference to the geographic location.

9. Ground transceiver (16) according to anyone of the preceding claims, wherein the transmit power is also determined based on an installation configuration of the ground transceiver (16).

10. The satellite transceiver (14) configured to receive concurrently a plurality of messages (20) at substantially the same carrier frequency from a plurality of ground transceivers (16) according to anyone of the preceding claims, wherein the satellite transceiver (14) is further configured to transmit a priority threshold indicative of the transmit power that the ground transceiver (16) having the transceiver ranking is authorized to use to transmit the message (20).

11. A terrestrial/satellite communication system (10) including the ground transceiver (16) according to anyone of claims 1 to 9 and the satellite transceiver (14) according to claim 10.

12. A method (300, 400) of controlling communication between a satellite transceiver (14) and a ground transceiver (16), said satellite transceiver (14) configured to receive concurrently a plurality of messages (20) at substantially the same carrier frequency from a plurality of ground transceivers (16), said method (300) comprising:
transmitting (415) a ranking threshold by the satellite transceiver (14), said ranking threshold indicative of a transmit power that a ground transceiver (16) is authorized to use to transmit a message (20);
receiving (430) the ranking threshold by the ground transceiver (16); and
determining (450) a transmit power of the transmitter (24) to transmit a message (20) based on a comparison of the ranking threshold and a transceiver ranking of the ground transceiver (16).

13. Method (300, 400) in accordance with claim 12, wherein said method (300) further comprises transmitting (460) the message (20) using the transmit power that is authorized.
